# EUROPÄISCHE PATENTANMELDUNG

(11) **EP 3 236 114 A1**
(43) Veröffentlichungstag der Anmeldung: **25.10.2017**
(21) Anmeldenummer: 16165894.3
(22) Anmeldetag: 19.04.2016
(51) Int. Cl.: F16J 15/06, F16J 15/10

(54) **DICHTUNG FÜR GERÄTE DER NAHRUNGS- UND GENUSSMITTELINDUSTRIE**

(71) Anmelder: Siemens Aktiengesellschaft, 80333 München (DE)
(72) Erfinder: Dirksen, Stephan, 90408 Nürnberg (DE); Fremuth, Erwin, 90613 Grosshabersdorf (DE); Naumann, Ralf, 90513 Zirndorf (DE); Riedel, Günther, 90469 Nürnberg (DE)

(57) **Zusammenfassung**

Die Erfindung betrifft eine Dichtung (1), insbesondere eine Dichtung für Geräte der Nahrungs- und Genussmittelindustrie, wobei die Dichtung (1) zur Abdichtung zwischen einem ersten (2) und einem zweiten (3) abzudichtenden Teil vorgesehen ist. Für eine sichere Abdichtung von zwei abzudichtenden Teilen wird vorgeschlagen, dass die Dichtung (1) einen nach innen gewandten Stabilisierungsbereich (4) und einen nach außenverlaufenden Dichtkeilbereich (5) aufweist. Bevorzugt weist der Stabilisierungsbereich (4) der Dichtung (1) einen Festanschlagbereich (6) aufweist, der zur Aufnahme eines am ersten und/oder am zweiten abzudichtenden Teil (2,3) angeordneten Festanschlags (7) vorgesehen ist.

## Beschreibung

Die Erfindung betrifft eine Dichtung, insbesondere eine Dichtung für Geräte der Nahrungs- und Genussmittelindustrie, wobei die Dichtung zur Abdichtung zwischen einem ersten und einem zweiten abzudichtenden Teil vorgesehen ist.

Die Erfindung betrifft weiter ein Gehäuse insbesondere für ein Gerät der Nahrungs- und Genussmittelindustrie mit mindestens einer derartigen Dichtung sowie ein Gerät der Nahrungs-und Genussmittelindustrie mit mindestens einer derartigen einer Dichtung.

Eine derartige Dichtung und ein derartiges Gehäuse mit einer derartigen Dichtung kommen insbesondere für Geräte der Nahrungs- und Genussmittelindustrie zum Einsatz. Für derartige Geräte wird häufig die Erreichung der Schutzart IP 69 K gefordert, die neben einer normalen Wasserdichtigkeit sogar eine Hochdruckreinigerfestigkeit vorschreibt. In der Norm 1672-2 wird dabei für Hygieneanforderungen eine sogenannte Shore-Härte von 70 Shore-Härte für die Dichtung empfohlen.

Der Erfindung liegt die Aufgabe zu Grunde, eine Dichtung, insbesondere eine Dichtung für Geräte der Nahrungs- und Genussmittelindustrie anzugeben, die auch in robusten Umgebungen die sichere Abdichtung von anzudichtende Teilen, insbesondere von Gehäuse- oder Geräteteilen ermöglicht.

Diese Aufgabe wird durch eine Dichtung, insbesondere für Geräte der Nahrungs- und Genussmittelindustrie gelöst, wobei die Dichtung zur Abdichtung zwischen einem ersten und einem zweiten abzudichtenden Teil vorgesehen ist und wobei die Dichtung einen nach innen gewandten Stabilisierungsbereich und einen nach außenverlaufenden Dichtkeilbereich aufweist. Der Erfindung liegt die Erkenntnis zugrunde, dass für die Einhaltung der Schutzart IP 69 K (Hochdruckreinigerfestigkeit) eine einfache Dichtung nicht ausreichend ist. Um die Anforderungen einer derartigen Schutzart hinsichtlich Dichtigkeit sicherzustellen, weist die erfindungsgemäße Dichtung einen geräteseitig nach innen gewandten Stabilisierungsbereich auf, der ein sicheres Abdichten des Innenbereichs sicherstellt. Darüber hinaus umfasst die Dichtung zusätzlich einen nach außen verlaufenden Dichtkeilbereich, der die Dichtung der abzudichtenden Gehäuse- bzw. Geräteteile übernimmmt. Durch die Ausbildung der Dichtung mit einem ersten sogenannten Stabilisierungsbereich und einem zweiten Dichtkeilbereich wird somit quasi eine doppelte bzw. redundante Dichtfunktion sichergestellt, die auf überraschend einfache Weise ein Einhalten auch der besonderen Anforderungen für Hochdruckreinigerfestigkeit sicherstellen kann.

Die Aufgabe wird weiter durch ein Gehäuse, insbesondere für ein Gerät der Nahrungs- und Genussmittelindustrie gemäß Anspruch 6 sowie durch ein Gerät der Nahrungs- und Genussmittelindustrie gemäß Anspruch 7 gelöst.

Vorteilhafte Ausgestaltungsformen sind in den Unteransprüchen enthalten.

Bei einer vorteilhaften Ausgestaltungsform sind das erste Teil ein erstes Gehäuseteil, insbesondere ein Gehäusedeckel und das zweite Teil ein zweites Gehäuseteil, insbesondere ein Gehäuse.

Bei einer weiteren vorteilhaften Ausgestaltungsform weist der Stabilisierungsbereich der Dichtung einen Festanschlagbereich auf, der zur Aufnahme eines am ersten und/oder am zweiten abzudichtenden Teil angeordneten Festanschlags vorgesehen ist.

Eine sichere und klar definierte Passung zwischen dem abzudichtenden Teil, beispielsweise einem Gehäusedeckel oder einer Gehäuserückwand eines abzudichtenden Gehäuses wird dadurch erzielt, dass der Festanschlagbereich als Ausformung in der Dichtung ausgebildet ist, wobei die Ausformung mit der Form des Festanschlags korrespondiert.

Eine sichere und dichte Verpressung zwischen dem ersten und dem zweiten abzudichtenden Teil wird in vorteilhafter Weise dadurch sichergestellt, dass der Stabilisierungsbereich eine erste Höhe aufweist, die in etwa 10% dicker als eine zweite Höhe des Festanschlagbereichs ist.

Damit auch bei einer Verschraubung des Gehäuses gerade im Bereich der Gehäuseschrauben eine sichere Abdichtung gewährleistet wird, weist die Dichtung im Festanschlagbereich eine Ausnehmung für die Aufnahme einer Gehäuseschraube auf, die von einem weiteren Dichtkeilbereich umgeben ist.

Im Folgenden wird die Erfindung anhand der in den Figuren dargestellten Ausführungsbeispiele näher beschrieben und erläutert.

### Es zeigen:

- FIG 1: eine schematische Darstellung einer zwischen einem ersten und einem zweiten abzudichtenden Teil einsetzbaren Dichtung im unverpressten Zustand,
- FIG 2: eine schematische Darstellung einer zwischen einem ersten und einem zweiten abzudichtenden Teil eingesetzten Dichtung im verpressten Zustand,
- FIG 3: eine schematische Darstellung einer zwischen einem ersten und einem zweiten abzudichtenden Teil einsetzbaren Dichtung im unverpressten Zustand mit einer Schraubendurchführung und
- FIG 4: eine schematische Darstellung einer zwischen einem ersten und einem zweiten abzudichtenden Teil eingesetzten Dichtung im verpressten Zustand mit Schraubendurchführung.

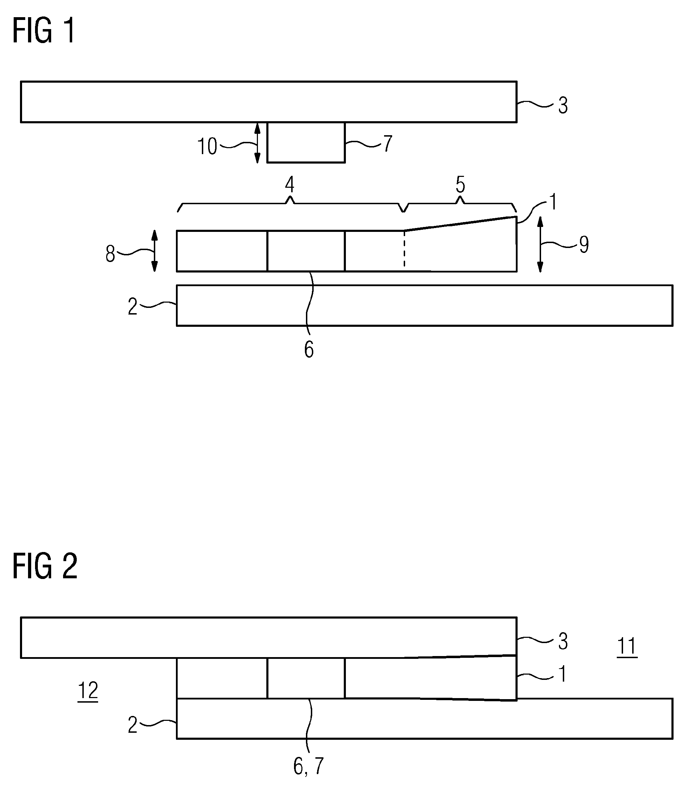

FIG 1 zeigt eine schematische Darstellung einer zwischen einer ersten 2 und einer zweiten 3 abzudichtenden Teil einlegbare Dichtung 1. Die Dichtung 1 weist einen nach innen gewandten Stabilisierungsbereich 4 und einen nach außen verlaufenden Dichtkeilbereich 5 auf. Zudem weist der Stabilisierungsbereich 4 der Dichtung 1 einen Festanschlagsbereich 6 auf, der zur Aufnahme eines am ersten oder zweiten abzudichtenden Teil 2,3 angeordneten Festanschlag 7 vorgesehen ist. Bei dem in FIG 1 dargestellten Ausführungsbeispiel ist der Festanschlag 7 an dem zweiten abzudichtenden Teil 3 angeordnet. Der Festanschlagbereich 6 ist als Ausformung 6 in der Dichtung 1 ausgebildet, wobei die Ausformung 6 mit der Form des Festanschlags 7 korrespondiert. Der Stabilisierungsbereich 4 weist idealerweise eine erste Höhe 8 auf, die in etwa 10% dicker als eine zweite Höhe 10 des Festanschlagbereichs 6 ist. Hierdurch kommt es zu einer druckstabilen Verpressung des Festanschlags 7 im Bereich des Festanschlagbereichs 6. Eine sichere Abdichtung nach außen eines durch die abzudichtenden Teile 2,3 abzudichten, wird durch die Dichtkeilausprägung des nach außen verlaufenden Dichtkeilbereichs 5 sichergestellt.

In FIG 1 ist lediglich ein Ausschnitt der Dichtung 1 dargestellt. Zur Abdichtung eines Gehäuses bzw. eines Gehäusedeckels bzw. einer Gehäuserückwand wird die Dichtung als umlaufende Dichtung zwischen zwei Gehäusehälften montiert. Eine definierte Verpressung der Dichtung wird dann mittels des Festanschlags 7 sowie des Festanschlagbereichs 6 realisiert, der quasi einen mechanischen Anschlag bildet. Eine Fixierung der Dichtung 1 kann darüber hinaus über weitere Fixierpunkte, beispielsweise sogenannte Dome oder Noppen bzw. über Verschraubungspunkte zwischen den Gehäuseteilen 2,3 erfolgen, wobei sich in der Dichtung 1 dann entsprechende Ausnehmungen für Verschraubungen befinden.

FIG 2 zeigt eine schematische Darstellung einer zwischen einen ersten 2 und einen zweiten 3 abzudichtenden Teil eingesetzten Dichtung 1 im verpressten Zustand. Dabei werden die bereits im Zusammenhang mit FIG 1 eingeführten Bezugszeichen verwendet. In FIG 2 ist klar ersichtlich, wie sich der Festanschlagbereich 6 und der Festanschlag 7 miteinander derart verpressen, dass zu einen Innenbereich 12 eine sichere Abdichtung erfolgt. Die Abdichtung zu einem Außenbereich 11 wird vom Dichtkeilbereich 5 (vergleiche FIG 1) übernommen. Durch die Keilform in diesem Bereich wird die Dichtung 1 im Außenbereich 11 intensiver verformt, so dass in diesem Bereich zum Außenbereich 11 hin eine erhöhte Dichtfähigkeit erzielt wird, die auch Schutzarten, wie IP 69 K, also Hochdruckreinigerfestigkeit sichterstellen kann.

Alles in Allem wird mithilfe des in FIG 2 dargestellten Dichtung 1, die im folgenden auch als Dichtkeil bezeichnet wird, somit sichergestellt, dass die Verpressung des Dichtkeils 1 nach außen stetig ansteigt bis zur maximalen Verpressung zum Außenbereich 11. Dabei besteht eine maximale Dichtwirkung am äußersten Rand zum Außenbereich 11, so dass zwischen Dichtung und die abzudichtenden Teile 2,3 nichts eindringen kann. Da die maximale Verpressung nur am äußeren Rand erfolgt, ist die erforderliche Anpresskraft vergleichsweise gering. Der Stabilisierungsbereich 4 wird nur geringfügig (ca. 10%) verpresst, bis der Festanschlag 6 auf den, d.h. auf den Festanschlagbereich 6 zum Festanschlag 7 aufliegt, wodurch die Dichtung 1 in ihrer Lage fixiert wird. Durch die passgenaue Ausformung für den Festanschlag 7 und gegebenenfalls weiteren Passungen ist die Lage der Dichtung 1 genau vorgegeben. Hierdurch wird eine exakte Dichtwirkung und auch eine geforderte Reinigbarkeit auch für die Nahrungs- und Genussmittelindustrie sichergestellt, da die Dichtung 1 letztendlich mit der Außenkante des abzudichtenden Bauteils bzw. Gehäuseteils sauber abschließt.

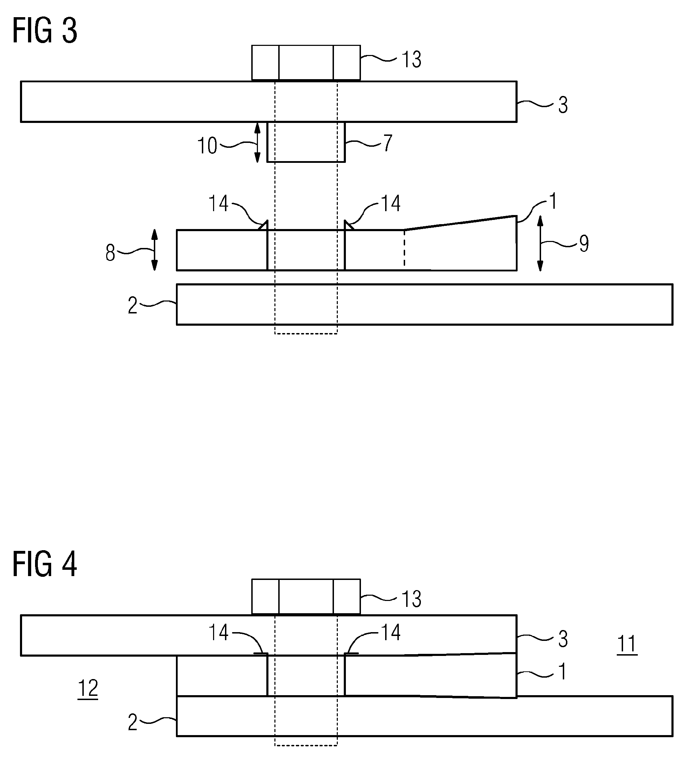

FIG 3 zeigt eine schematische Darstellung einer zwischen einem ersten 3 und einem zweiten 4 abzudichtenden Teil einsetzbaren Dichtung 1 im unverpressten Zustand mit einer Schraubendurchführung. Hierzu weist die Dichtung 1 im Festanschlagbereich 6 (vgl. FIG 1 und 2) eine Ausnehmung für die Aufnahme einer Gehäuseschraube 13 auf. In diesem Bereich ist die Dichtung 1 von einem weiteren Dichtkeilbereich 14 umgeben. Die Keilform dieses Dichtkeilbereichs 14 geht um die Bohrung herum und ist ca. 0,2 mm hoch. Hierdurch wird auch bei einer Verschraubung des Gehäuses gerade im Bereich der Gehäuseschrauben eine sichere Abdichtung der abzudichtenden Teile 2,3 gewährleistet. Bezüglich der weiteren Elemente wird auf die Beschreibung zu den Figuren 1 und 2 verwiesen.

FIG 4 eine schematische Darstellung der zwischen einem ersten und einem zweiten abzudichtenden Teil eingesetzten Dichtung aus Figur 3 im verpressten Zustand. Dabei wird ersichtlich, dass um die Schraubendurchführung aufgrund des weiteren Dichtkeilbereichs hier eine gezielte und sichere Dichtwirkung erziel wird.

Zusammenfassend betrifft die Erfindung somit eine Dichtung 1, insbesondere eine Dichtung für Geräte der Nahrungs- und Genussmittelindustrie, wobei die Dichtung 1 zur Abdichtung zwischen einem ersten 2 und einem zweiten 3 abzudichtenden Teil vorgesehen ist. Für eine sichere Abdichtung von zwei abzudichtenden Teilen, insbesondere Geräte- oder Gehäuseteilen wird vorgeschlagen, dass die Dichtung 1 einen nach innen gewandten Stabilisierungsbereich 4 und einen nach außen verlaufenden Dichtkeilbereich 5 aufweist. Bevorzugt weist der Stabilisierungsbereich 4 der Dichtung 1 einen Festanschlagbereich 6 aufweist, der zur Aufnahme eines am ersten und/oder am zweiten abzudichtenden Teil 2,3 angeordneten Festanschlags 7 vorgesehen ist.

## Patentansprüche

1. Dichtung (1) insbesondere für Geräte der Nahrungs- und Genussmittelindustrie, wobei die Dichtung (1) zur Abdichtung zwischen einem ersten (2) und einem zweiten (3) abzudichtenden Teil vorgesehen ist und wobei die Dichtung (1) einen nach innen gewandten Stabilisierungsbereich (4) und einen nach außen verlaufenden Dichtkeilbereich (5) aufweist.

2. Dichtung nach Anspruch 1, wobei das erste Teil (2) ein erstes Gehäuseteil, insbesondere ein Gehäusedeckel und das zweite Teil (3) ein zweites Gehäuseteil, insbesondere ein Gehäuse ist.

3. Dichtung nach einem der Ansprüche 1 oder 2, wobei der Stabilisierungsbereich (4) der Dichtung (1) einen Festanschlagbereich (6) aufweist, der zur Aufnahme eines am ersten und/oder am zweiten abzudichtenden Teil (2 ,3) angeordneten Festanschlags (7) vorgesehen ist.

4. Dichtung nach einem der Ansprüche 1 bis 3, wobei der Festanschlagbereich (6) als Ausformung (6) in der Dichtung (1) ausgebildet ist, wobei die Ausformung (6) mit der Form des Festanschlags (7) korrespondiert.

5. Dichtung nach einem der Ansprüche 1 bis 4, wobei der Stabilisierungsbereich (4) eine erste Höhe (8) aufweist, die in etwa 10% dicker als eine zweite Höhe (10) des Festanschlagbereichs (6).

6. Dichtung nach einem der Ansprüche 1 bis 5, wobei die Dichtung (1) im Festanschlagbereich (6) eine Ausnehmung für die Aufnahme einer Schraube (13) aufweist, die von einem weiteren Dichtkeilbereich (14) umgeben ist.

7. Gehäuse insbesondere für ein Gerät der Nahrungs- und Genussmittelindustrie mit mindestens einer Dichtung nach einem der Ansprüche 1 bis 6.

8. Gerät der Nahrungs- und Genussmittelindustrie mit mindestens einer Dichtung nach einem der Ansprüche 1 bis 6.
